# EUROPÄISCHE PATENTSCHRIFT

(11) **EP 1 882 356 B1**
(45) Veröffentlichungstag und Bekanntmachung des Hinweises auf die Patenterteilung: **01.08.2018**
(21) Anmeldenummer: 06707175.3
(22) Anmeldetag: 22.02.2006
(51) Int. Cl.: H04M 1/725

(54) **VERFAHREN UND SYSTEM ZUM NUTZEN VON FUNKTIONSTASTEN ZUR ANZEIGE DER ANZAHL UND AUFRUFEN VON EREIGNISSEN**
METHOD AND SYSTEM FOR USING FUNCTION KEYS FOR DISPLAYING THE NUMBER AND CALLING OF EVENTS
PROCEDE ET SYSTEME POUR UTILISER DES TOUCHES FONCTIONNELLES SERVANT A AFFICHER UN NOMBRE D'EVENEMENTS ET A APPELER CES DERNIERS

(30) Priorität: 20.05.2005 DE 102005023962
(43) Veröffentlichungstag der Anmeldung: 30.01.2008
(73) Patentinhaber: Vodafone Holding GmbH, 40213 Düsseldorf (DE)
(72) Erfinder: LISS, Peter, 11523 Stockholm (SE); LACROIX, Ronan, 40221 Düsseldorf (DE); TOLLEMACHE, Luke, Oxford OX41 1YB (GB); ZSCHOCKE, Alexander, 40547 Düsseldorf (DE); DE VOS, Geert, B-1730 Asse (BE); BURHOLT, Adrian, Bromham Wiltshire SN15 2DW (GB); PULLIN, Graham, Ecir 5DF, London (GB); SIEMES, Thorsten, 40225 Düsseldorf (DE); PORTZ, Michael, 41812 Erkelenz (DE); GOODRIDGE, Matthew, RG 3 DG England (GB)
(74) Vertreter: Weisbrodt, Bernd
(86) Internationale Anmeldenummer: PCT/EP2006/001612
(87) Internationale Veröffentlichungsnummer: WO 2006/122592

(56) Entgegenhaltungen:
- EP-A- 0 982 959
- EP-A- 1 372 323
- DE-C1- 10 043 284
- GB-A- 2 344 492
- US-A1- 2003 157 970
- US-A1- 2004 058 702
- US-B1- 7 035 382

## Beschreibung

Die vorliegende Erfindung betrifft ein Verfahren zum Betreiben eines in einem Telekommunikationsnetz nutzbaren Endgerätes, mit den Merkmalen des Oberbegriffs des Anspruchs 1.

Im Stand der Technik sind derartige Verfahren und Endgeräte in zahlreichen Ausführungsformen und Ausgestaltungen bekannt, beispielsweise aus der EP 1 372 323 A1 oder der EP 0 982 959 A2, insbesondere von leitungsvermittelnden Kommunikationsnetzen wie drahtgebundenen Fernsprechnetzen, auch Festnetze genannt, und in beziehungsweise an diesen betreibbaren Festnetztelefonen oder von digitalen zellularen Mobilfunknetzen und in diesen nutzbaren beziehungsweise betreibbaren Mobilfunktelefonen, insbesondere gemäß dem GSM-Funknetzstandard (GSM: Global System for Mobile Communications). Neben einer herkömmlichen Kommunikation durch
Telefonieren ermöglichen derartige Verfahren und Endgeräte die Nutzung weiterer von Telekommunikationsnetzen, insbesondere Mobilfunknetzen, bereitgestellter Dienste, die weitere Informationen, insbesondere Kommunikationsinformationen wie beispielsweise verpasste Anrufe hinsichtlich der einem Telekommunikationsteilnehmer im Telekommunikationsnetz zugeordneten Rufnummer, beispielsweise die sogenannte MSISDN (MSISDN: Mobile Station ISDN-Number; ISDN: Integrated Services Digital Network), eingegangene Nachrichten wie Kurzmitteilungen eines Kurzmitteilungsdienstes SMS (SMS: Short Messages Service), sogenannte Voice Mails eines Sprachdienstes oder dergleichen Nachrichten, verwenden. Neben derartigen Kommunikationsinformationen finden darüber hinaus als Informationen Erinnerungsfunktionen für Termine sowie Funktions- und/oder Betriebszustände des Endgerätes als Informationen Verwendung, insbesondere im Rahmen von seitens der Endgeräte als Anwendungsprogramme ausführbarer Terminplaner oder entsprechender Hinweise hinsichtlich des Ladezustandes des Akkumulators eines Endgerätes, des zur Verfügung stehenden freien Speicherplatzes oder dergleichen Funktions- beziehungsweise Betriebszuständen eines Endgerätes.

Derartige Informationen sind in der Regel seitens der Anzeigeeinrichtung eines Endgerätes optisch und/oder akustisch wiedergebbar. Bei der Wiedergabe seitens eines Endgerätes eingehender Kommunikationsinformationen, beispielsweise Anrufen oder Kurzmitteilungen, wird seitens der Anzeigeeinrichtung eines Endgerätes die entsprechende Information optisch wiedergegeben, wobei Bestandteil der Information mitunter die Anzahl der entsprechenden für eine weitergehende Nutzung zur Verfügung stehenden Informationen ist. Die Wiedergabe und Erfassung dieser Gesamtanzahl der Informationen ist beispielsweise als ein SMS-Standard durch die 3GPP (Third Generation Partnership Project) definiert, beispielsweise durch die sogenannte TP-UDH binary counter information für Voicemails (vml), E-Mails und/oder Fax im SMS-Standard. Dabei ist bisher nachteiligerweise die Anzahl der Informationen integrativer Bestandteil der für eine weitergehende Nutzung zur Verfügung stehenden Informationen. So werden beispielsweise bei einem Mobilfunktelefon seitens der Anzeigeeinrichtung im Rahmen entsprechender Informationen dem Nutzer des Endgerätes mitgeteilt, wie viele Anrufe dieser verpasst hat oder wie viele Nachrichten für ihn eingegangen sind, beispielsweise als sogenannte SMS oder als für den Nutzer in der Regel seitens einer seitens des Telekommunikationsnetzes bereitgehaltenen Mailbox erfasster Sprachnachrichten, die Anrufer für den Nutzer hinterlassen haben. Eine weitergehende Nutzung dieser Informationen erfolgt üblicherweise durch aufwändige Tasteneingaben seitens des Endgerätes, die in der Regel umfangreiche und aufwändige Eingaben in seitens des mobilen Endgerätes dafür vorgesehenen Menüs beziehungsweise Menüführungen erfordern. Eine weitergehende Nutzung von zur Verfügung stehenden Informationen seitens der Endgeräte bedingt insofern eine entsprechende Bedienbarkeit und/oder Handhabbarkeit der Endgeräte, wozu diese entsprechende Nutzungen ermöglichende Anwendungen aufweisen müssen. In Abhängigkeit von Art und Umfang der weitergehenden Nutzungen von Informationen weisen die Anwendungen dabei mitunter derart umfangreiche und insbesondere für ältere und/oder ungeübte Nutzer nicht beziehungsweise nur schwer verständliche Bedienmöglichkeiten bereitstellende Menüführungen auf, dass nutzerseitig von einer weitergehenden Nutzung der Informationen abgesehen wird beziehungsweise eine solche nur unzureichend erfolgt.

Nachteilig ist darüber hinaus, dass unabhängig von dem Umfang der mitunter erfolgenden weitergehenden Nutzung die Anzahl der für eine weitergehende Nutzung zur Verfügung stehenden Informationen nicht mehr seitens der Anzeigeeinrichtung des Endgerätes wiedergegeben wird, sobald eine Betätigung der Eingabeeinrichtung des Endgerätes erfolgt ist, auch wenn diese Eingabe nicht oder nur zu einer unvollständigen weitergehenden Nutzung der Informationen führte. So wird zwar seitens der Anzeigeeinrichtung eines Mobilfunktelefons angezeigt, dass beispielsweise drei Sprachnachrichten auf der sogenannten Mailbox eingegangen sind, allerdings wird nach einer Tasteneingabe und/oder dem erfolgenden Abhören von nur einer Nachricht die Anzahl der verbleibenden ungenutzten Informationen seitens der Mailbox nicht beziehungsweise so lange nicht aktualisiert, bis weitere Nachrichten seitens der Mailbox eingegangen sind. In der Regel führt dies dazu, dass für eine weitergehende Nutzung zur Verfügung stehende Informationen ungenutzt bleiben und Nutzer dementsprechend von einer weitergehenden Nutzung entsprechender Informationen seitens der Endgeräte und damit von einer Nutzung von mit dem Endgerät nutzbaren Diensten des Telekommunikationsnetzes nur unzureichend Gebrauch machen, insbesondere da die Bedienung und/oder Handhabung insbesondere für ältere und/oder ungeübte Nutzer nicht transparent und eindeutig genug ist.

Die EP 1 372 323 A1 offenbart ein Mobiltelefon mit einem Tastenfeld mit Wähl- und Funktionstasten und einer Anzeigeeinrichtung sowie mit integrierten Sende- und Empfangseinrichtungen, aufweisend ein einer Taste des Mobiltelefons zugeordnetes, eine geeignete Tasten-Bezeichnung oder dazu gleichwertige Ausdrücke anderer Sprachen oder ein Symbol darstellendes Anzeigefeld der Anzeigeeinrichtung, welches im Standby-Betrieb bei bestimmten Ereignissen, wie z.B. beim Empfang einer Nachricht über Kurznachrichtenservice oder z.B. bei einer erfolgten Anrufidentifizierung blinkt oder auf sonstige Weise die Aufmerksamkeit des Benutzers auf sich lenkt.

Die EP 0 982 959 A2 offenbart ein Endgerät mit einer Steuereinrichtung zum Empfangen und/oder Senden einer ortsunabhängigen Kurznachricht über ein zellulares Kommunikationsnetz offenbart, wobei die Kurznachricht eine Identifikationseinrichtung umfasst. Darüber hinaus verfügt das Terminal über eine Anzeigevorrichtung zum Präsentieren von Kurznachrichten an einen Benutzer des Terminals und einen Nachrichtenordner zum Platzieren und/oder Speichern von ortsunabhängigen Kurznachrichten. Der Ordner wird auf dem Display angezeigt und verfügt über Sortiermittel zur Auswahl ortsunabhängiger Kurznachrichten beim Empfangen/Senden einer ortsunabhängigen Kurznachricht. Das Sortiermittel sortiert eine Nachricht automatisch in den Ordner, wenn das Identifikationsmittel in der ortsunabhängigen Kurznachricht von dem Sortiermittel erkannt wird.

Die US 7,035,382 B1 offenbart ein Voicemailbox-Verwaltungsverfahren in einem Voicemail-System mittels einer gegenseitigen Benachrichtigungsfunktion zwischen einem mobilen Telekommunikationsendgerät und einem Voicemail-Server, der einen erweiterten Kurznachrichtendienst verwendet. Bei einem Zustandswechsel in der Sprachmailbox des Voicemail-Servers und der Sprachmailbox des mobilen Telekommunikationsendgerätes wird eine Kurznachricht gesendet, welche den Zustandswechsel anzeigt. Entsprechend der empfangenen Kurznachricht wird der Zustand der Voicemailbox im Voicemail-Sserver oder im mobilen Endgerät des Benutzers geändert. So kann die Kohärenz der identischen Informationen in beiden Sprachboxen des Voicemail-Servers und des mobilen Telekommunikationsendgeräts des Benutzers erhalten bleiben.

Die DE 100 43 284 C1 offenbart ein Funkgerät mit einer Schnittstelle zum Empfang wenigstens einer Nachricht und mit einer Anzeigevorrichtung, wobei die Anzeigevorrichtung einen eingeschalteten und einen ausgeschalteten Betriebszustand einnehmen kann und wobei das Funkgerät einen Nachrichtenindikator umfasst, wobei der Nachrichtenindikator mittels einer Signalisierung den Eingang der Nachricht unabhängig vom Betriebszustand der Anzeigevorrichtung signalisiert.

Vor diesem Hintergrund liegt der vorliegenden Erfindung die **Aufgabe** zugrunde, ein Verfahren zum Betreiben eines in einem Telekommunikationsnetz, vorzugsweise einem Mobilfunknetz, nutzbaren Endgerätes der eingangs genannten Art, als auch ein Endgerät zur Nutzung in einem Telekommunikationsnetz, vorzugsweise einem Mobilfunknetz, der eingangs genannten Art unter Meidung der beschriebenen Nachteile derart weiterzubilden, dass insbesondere für ältere und/oder ungeübte Nutzer eine einfache und weniger umständliche Bedien- beziehungsweise Handhabbarkeit hinsichtlich einer weitergehenden Nutzung von zur Verfügung stehenden Informationen ermöglicht wird.

Zur technischen **Lösung** dieser Aufgabe wird mit der vorliegenden Erfindung ein Verfahren zum Betreiben eines in einem Telekommunikationsnetz nutzbaren Endgerätes vorgeschlagen, welches eine Anzeigeeinrichtung zur optischen und/oder akustischen Wiedergabe von Informationen und wenigstens eine Eingabeeinrichtung zur Erfassung von Informationen aufweist, wobei die Anzahl von für eine weitergehende Nutzung zur Verfügung stehender Informationen erfasst und seitens der Anzeigeeinrichtung des Endgerätes wiedergegeben wird und wobei durch Betätigung der Eingabeeinrichtung des Endgerätes wenigstens eine weitergehende Nutzung von Informationen ermöglicht wird, wobei die Anzahl in Abhängigkeit von einer erfolgenden weitergehenden Nutzung dekrementiert oder inkrementiert und entsprechend seitens der Anzeigeeinrichtung des Endgerätes wiedergegeben wird, wobei die Anzahl von wenigstens einer Zähleinrichtung erfasst wird, dadurch gekennzeichnet, dass die initiale Anzahl von für eine weitergehende Nutzung zur Verfügung stehender Informationen aus einer standardisierten Nachricht gemäß dem Funknetzstandard des Mobilfunknetzes extrahiert und der Zähleinrichtung zur Verfügung gestellt wird, wobei eine Nutzung der TP-UDH binary counter information für Voicemails, Emails und/oder Fax gemäß dem 3GPP Standard für SMS zur Extrahierung der Anzahl aus der Nachricht vorgesehen ist, und dass eine Analyse des Textes der Nachricht hinsichtlich einer bestimmten Zeichenfolge zur Extrahierung der Anzahl aus der Nachricht erfolgt.

Der Schutzumfang wird vorliegend durch den in den unabhängigen Patentansprüchen 1 und 21 beschriebenen Umfang definiert.

Der vorliegenden Erfindung liegt die Erkenntnis zugrunde, dass eine insbesondere für ältere und/oder ungeübte Nutzer transparente und verständliche Bedien- beziehungsweise Handhabbarkeit hinsichtlich einer weitergehenden Nutzung der Informationen durch eine aktualisierte Wiedergabe der Anzahl von für eine weitergehende Nutzung zur Verfügung stehender Informationen in Abhängigkeit von erfolgenden weitergehenden Nutzungen ermöglicht wird. Erfindungsgemäß wird die Anzahl von für eine weitergehende Nutzung zur Verfügung stehender Informationen seitens der Anzeigeeinrichtung des Endgerätes entsprechend der erfolgenden weitergehenden Nutzung wiedergegeben, wobei die weitergehende Nutzung zu einem Dekrementieren oder einem Inkrementieren der Anzahl führen kann, je nach Art der Information und der erfolgenden weitergehenden Nutzung. Der Nutzer eines entsprechenden Endgerätes kann so erfindungsgemäß akustisch und/oder optisch darauf hingewiesen werden, dass für ihn Informationen, insbesondere Kommunikationsinformationen, zur Verfügung stehen. Durch die aktualisierbare Wiedergabe der Anzahl der Informationen wird der Nutzer so vorteilhafterweise an diese und entsprechende weitergehende Nutzungen erinnert, wodurch entsprechende Nutzungen erfahrungsgemäß vorteilhafterweise häufiger und umfangreicher erfolgen.

Entsprechend der vorgeschlagenen Lösung ist vorgesehen, dass die Anzahl von für eine weitergehende Nutzung zur Verfügung stehender Informationen von wenigstens einer Zähleinrichtung erfasst wird, wobei dies vorzugsweise für Informationen unterschiedlicher Art und/oder unterschiedlichen Typs vorzugsweise jeweils eine Zähleinrichtung vorgesehen ist. Seitens der Anzeigeeinrichtung sind so unterschiedliche Informationen hinsichtlich ihrer jeweils aktualisierbaren Anzahl nach Art und/oder Typ erfassbar und entsprechend wiedergebbar. So können seitens der Anzeigeeinrichtung des Endgerätes vorteilhafterweise Sprachnachrichten, Kurzmitteilungen, Terminerinnerungen und/oder dergleichen Informationen hinsichtlich ihrer jeweils vorliegenden Anzahl dem Nutzer durch Wiedergabe angezeigt werden, vorteilhafterweise optisch und/oder akustisch.

In einer weiteren vorteilhaften Ausgestaltung der Erfindung ist wenigstens eine Zähleinrichtung seitens des Endgerätes und/oder seitens des Telekommunikationsnetzes vorgesehen. Eine seitens des Endgerätes vorgesehene Zähleinrichtung ist so beispielsweise zur Erfassung von Erinnerungsfunktionen oder dergleichen Anwendungen dienenden Informationen nutzbar, insbesondere wenn das Endgerät eingeschaltet ist. Eine seitens des Telekommunikationsnetzes vorgesehene Zähleinrichtung zur Erfassung der Anzahl von für eine weitergehende Nutzung zur Verfügung stehender Informationen ist vorteilhafterweise nutzbar, um an das Endgerät gerichtete Informationen hinsichtlich ihrer Anzahl zu erfassen, wenn das Endgerät ausgeschaltet und/oder im Telekommunikationsnetz nicht erreichbar ist.

Gemäß einem weiteren vorteilhaften Vorschlag der Erfindung wird die Anzahl von an das Endgerät gerichteter Kommunikationsinformationen erfasst, vorzugsweise die Anzahl von an das Endgerät gerichteter ungenutzter Kommunikationsinformationen. Eine weitere Ausgestaltung der Erfindung sieht vor, dass die Anzahl seitens des Telekommunikationsnetzes erfasst, über das Telekommunikationsnetz an das Endgerät übertragen und seitens der Anzeigeeinrichtung des Endgerätes wiedergegeben wird. In einer weiteren Ausgestaltung der Erfindung wird die endgeräteseitige Nutzung von Kommunikationsinformationen erfasst, die Anzahl ungenutzter Kommunikationsinformationen entsprechend einer endgeräteseitig erfolgenden Nutzung aktualisiert und seitens der Anzeigeeinrichtung des Endgerätes wiedergegeben. Alternativ wird in einer weiteren vorteilhaften Ausgestaltung der Erfindung die endgeräteseitige Nutzung von Kommunikationsinformationen seitens des Telekommunikationsnetzes erfasst, die Anzahl ungenutzter Kommunikationsinformationen entsprechend einer endgeräteseitig erfolgenden Nutzung aktualisiert, über das Telekommunikationsnetz an das Endgerät übertragen und seitens der Anzeigeeinrichtung des Endgerätes wiedergegeben.

Gemäß einer bevorzugten Ausgestaltung der Erfindung erfolgt eine Wiedergabe der Anzahl von für eine weitergehende Nutzung zur Verfügung stehender Informationen seitens der Anzeigeeinrichtung des Endgerätes, wenn diese größer null ist. Der Nutzer eines Endgerätes kann so, insbesondere wenn die Wiedergabe vorteilhafterweise nach Art und/oder Typ der Informationen voneinander getrennt erfolgt, unmittelbar seitens der Anzeigeeinrichtung des Endgerätes erfassen, ob und/oder welche Informationen für eine weitergehende Nutzung zur Verfügung stehen.

Vorteilhafterweise werden als Informationen in einer weiteren bevorzugten Ausgestaltung der Erfindung Erinnerungsfunktionen für Termine, Funktions- und/oder Betriebszustände des Endgerätes, insbesondere der Ladezustand des Akkumulators des Endgerätes, und/oder Kommunikationsinformationen wie eingehende, abgehende und/oder verpasste Anrufe und/oder Mitteilungen eines Nachrichtendienstes des Telekommunikationsnetzes, vorzugsweise sogenannte SMS und/oder sogenannte MMS (MMS: Multimedia Message Service) genutzt.

In einer weiteren vorteilhaften Ausgestaltung der Erfindung weist die Eingabeeinrichtung des Endgerätes wenigstens eine Taste auf, die bei Betätigung wenigstens eine weitergehende Nutzung der Informationen ermöglicht. Die Betätigung der Taste löst dabei vorteilhafterweise die weitergehende Nutzung aus und/oder bewirkt diese. Vorteilhafterweise ist die Taste ausschließlich zur Auslösung und/oder Bewirkung der weitergehenden Nutzung der Informationen funktionalisiert. Erfindungsgemäß werden so ansonsten erforderliche umfangreiche und/oder aufwändige Tasteneingaben seitens einer Eingabeeinrichtung des Endgerätes entbehrlich und die Bedienung und/oder Handhabbarkeit zur Wiedergabe der Rufnummer insbesondere für ältere und/oder ungeübte Nutzer weiter vereinfacht. Vorteilhafterweise ist die eine entsprechende weitergehende Nutzung der Informationen durch Betätigung ermöglichende Taste der Eingabeeinrichtung derart ausgebildet, dass diese ihre Farbe hinsichtlich der jeweiligen weitergehenden Nutzung der zur Verfügung stehenden Informationen verändert. Die Veränderung der Farbe der Taste der Eingabeeinrichtung signalisiert dem Nutzer dabei vorteilhafterweise sowohl die Bedienmöglichkeit zur weitergehenden Nutzung der Informationen als auch die zu betätigende Taste für eine entsprechende weitergehende Nutzung der Informationen selbst, wodurch die Bedien- beziehungsweise Handhabbarkeit des Endgerätes weiter vereinfachbar ist. In einer besonders bevorzugten Ausgestaltung der Erfindung ist die entsprechende Taste der Eingabeeinrichtung des Endgerätes vorteilhafterweise farbig beleuchtbar und sind entsprechende Bedienmöglichkeiten für eine weitergehende Nutzung der Informationen durch verschiedene Leuchtfarben und/oder Blinklichtkombinationen dem Nutzer signalisierbar.

In einer weiteren Ausgestaltung der Erfindung erfolgt die Betätigung der Eingabeeinrichtung des Endgerätes für eine weitergehende Nutzung der Informationen akustisch, vorzugsweise durch Spracheingabe. Bei entsprechender Funktionalität des Endgerätes können erfindungsgemäß ansonsten erforderliche umfangreiche und/oder aufwändige Tasteneingaben seitens des Endgerätes entfallen.

In einer weiteren besonders vorteilhaften Ausgestaltung der Erfindung erfolgt die Betätigung der Eingabeeinrichtung durch räumliche Bewegung des Endgerätes, vorzugsweise durch ein wenigstens einmal erfolgendes Verschwenken des Endgerätes um wenigstens eine Koordinatenachse des Endgerätes. Auch bei dieser Ausgestaltung der Erfindung können so umfangreiche und/oder aufwändige Tasteneingaben vorteilhafterweise entfallen. Zur Realisierung dieser Funktionalität weist das erfindungsgemäße Endgerät vorteilhafterweise eine räumliche Bewegung des Endgerätes erfassende Sensoreinrichtung auf, die entsprechend auswertbar ist.

In einer weiteren besonders vorteilhaften Ausgestaltung der Erfindung wird die weitergehende Nutzung der Informationen bei Betätigung der Eingabeeinrichtung des Endgerätes vorzugsweise ohne ein zusätzliches Menü und/oder eine zusätzliche Menüführung ausgelöst und/oder bewirkt. Die Bedienung und/oder Handhabung ist so insbesondere für ältere und/oder ungeübte Nutzer hinsichtlich einer weitergehenden Nutzung der Informationen weiter vereinfachbar. Darüber hinaus können Nutzer eines erfindungsgemäßen Endgerätes so an die Handhabung und/oder Bedienung desselben zur weitergehenden Nutzung zur Verfügung stehender Informationen gewöhnt werden, so dass eine entsprechende weitergehende Nutzung der Informationen häufiger und/oder gewohnheitsmäßiger beziehungsweise quasi mechanisiert erfolgen kann.

In einer weiteren vorteilhaften Ausgestaltung der Erfindung wird eine mehrfache Nutzung der Informationen durch entsprechende Betätigung der Eingabeeinrichtung des Endgerätes ermöglicht. Erfindungsgemäß können Nutzer so beispielsweise Nachrichten auf der Mailbox auf einfache Art und Weise mehrfach abhören, ohne dass umständliche und/oder aufwändige Bedieneingaben erforderlich sind und ohne das die Gefahr eines versehentlichen Löschens und/oder Überspringens von Informationen, insbesondere Nachrichten, gegeben ist.

In einer weiteren besonderes vorteilhaften Ausgestaltung der Erfindung ist die weitergehende Nutzung der zur Verfügung stehenden Informationen und/oder die dazugehörende Betätigung der Eingabeeinrichtung des Endgerätes einstellbar, vorzugsweise nutzerindividuell. Erfindungsgemäß kann die weitergehende Nutzung als auch die entsprechende Bedienung beziehungsweise Handhabung des Endgerätes so vorteilhafterweise an die bestehenden Bedürfnisse und/oder Anforderungen eines Nutzers angepasst werden.

In einer weiteren besonders vorteilhaften Ausgestaltung der Erfindung werden die für eine weitergehende Nutzung zur Verfügung stehenden Informationen gewichtet und seitens der Anzeigeeinrichtung des Endgerätes entsprechend der Gewichtung sortiert wiedergegeben. Erfindungsgemäß ist der Wiedergabe der Informationen zur weitergehenden Nutzung der Informationen so quasi eine Art Filterlogik überlagert, welche eine Sortierung der für eine weitergehende Nutzung zur Verfügung stehenden Informationen hinsichtlich deren Wichtigkeit für den jeweiligen Nutzer vornimmt. Dadurch wird vorteilhafterweise eine weitere Vereinfachung hinsichtlich der Nutzung von Informationen erzielt, welche die Synergie der Informationsnutzung seitens des Endgerätes für den Nutzer weiter steigert. Vorteilhafterweise wird die Gewichtung anhand der Anzahl von für eine weitergehende Nutzung zur Verfügung stehender Informationen bestimmt. Dabei indiziert vorteilhafterweise eine hohe Anzahl von für eine weitergehende Nutzug zur Verfügung stehender Informationen, insbesondere nach Art- und/oder Typ der Informationen, eine hohe Gewichtung und damit eine entsprechende hohe Wichtigkeit für den Nutzer. In einer weiteren vorteilhaften Ausgestaltung der Erfindung wird die Gewichtung anhand des Vorhandenseins einer bestimmten Zeichenfolge seitens einer Information, vorzugsweise einer Mitteilung eines Nachrichtendienstes des Telekommunikationsnetzes, bestimmt. Vorteilhafterweise ist die Zeichenfolge einstellbar, vorzugsweise nutzerindividuell. So kann der Nutzer erfindungsgemäß mit anderen Kommunikationspartnern beispielsweise eine bestimmte Zeichenfolge als die Wichtigkeit der Informationen erhöhende Kennung vereinbaren, welche seitens des Endgerätes erfindungsgemäß entsprechende Berücksichtigung finden kann, was insbesondere in Notfallsituationen oder dergleichen vorteilhaft ist. In einer weiteren vorteilhaften Ausgestaltung der Erfindung werden als Zeichenfolge Schlüsselworte und/oder Telekommunikationsteilnehmern im Telekommunikationsnetz zugeordnete Rufnummern, vorzugsweise die sogenannte MSISDN, genutzt.

Gemäß einer weiteren vorteilhaften Ausgestaltung der Erfindung ist das erfindungsgemäße Verfahren als Anwendungsprogramm auf das Endgerät übertragbar und seitens des Endgerätes ausführbar. Bei entsprechender Ausgestaltung des Endgerätes lässt sich so die Funktionalität des erfindungsgemäßen Verfahrens seitens entsprechender Endgeräte vorteilhafterweise nachrüsten, beispielsweise durch Aufspielen des Anwendungsprogramms über das Telekommunikationsnetz oder dergleichen Verbindungen und/oder entsprechende mit dem Endgerät verbindbare Einrichtungen, beispielsweise einem PC oder dergleichen Recheneinrichtung.

Zur technischen **Lösung** der eingangs genannten Aufgabe wird mit der vorliegenden Erfindung ferner ein Endgerät zur Nutzung in einem Mobilfunknetz mit einer Anzeigeeinrichtung zur optischen und/oder akustischen Wiedergabe von Informationen und wenigstens einer Eingabeeinrichtung zur Erfassung von Informationen bereitgestellt, wobei die Anzahl von für eine weitergehende Nutzung zur Verfügung stehender Informationen seitens der Anzeigeeinrichtung wiedergebbar ist und durch Betätigung der Eingabeeinrichtung wenigstens eine weitergehende Nutzung von Informationen ermöglicht ist, welches wenigstens eine Zähleinrichtung zur Erfassung der Anzahl von für eine weitergehende Nutzung zur Verfügung stehender Informationen aufweist, wobei dieses Endgerät dazu ausgebildet und/oder eingerichtet ist, die seitens des Endgeräts auszuführenden Verfahrensschritte des zur Lösung vorgeschlagenen Verfahrens auszuführen.

In einer weiteren vorteilhaften Ausgestaltung der Erfindung weist das Endgerät für Informationen unterschiedlicher Art und/oder unterschiedlichen Typs vorzugsweise jeweils eine Zähleinrichtung auf.

Vorteilhafterweise ist das erfindungsgemäße Endgerät derart ausgebildet, dass mit diesem die endgeräteseitige Nutzung von Informationen erfassbar, die Anzahl ungenutzter Informationen entsprechend einer endgeräteseitig erfolgenden Nutzung aktualisierbar und seitens der Anzeigeeinrichtung wiedergebbar ist.

In einer weiteren vorteilhaften Ausgestaltung der Erfindung weist die Eingabeeinrichtung wenigstens eine Taste auf, die bei Betätigung wenigstens eine weitergehende Nutzung der Informationen ermöglicht, vorteilhafterweise durch Auslösung und/oder Bewirkung der weitergehenden Nutzung der Informationen. Vorteilhafterweise ist die erfindungsgemäße Taste der Eingabeeinrichtung des erfindungsgemäßen Endgerätes ausschließlich zur weitergehenden Nutzung der Informationen funktionalisiert. Erfindungsgemäß werden so ansonsten erforderliche umfangreiche und/oder aufwändige Tasteneingaben seitens einer Eingabeeinrichtung des Endgerätes entbehrlich und die Bedienung und/oder Handhabung zur weitergehenden Nutzung vereinfacht, insbesondere für ältere und/oder ungeübte Nutzer.

In einer weiteren Ausgestaltung der Erfindung erfolgt die Betätigung der Eingabeeinrichtung für eine weitergehende Nutzung der Informationen akustisch, vorzugsweise durch Spracheingabe. Durch entsprechende Funktionalisierung des Endgerätes können so ansonsten erforderliche umfangreiche und/oder aufwändige Tasteneingaben seitens des Endgerätes entfallen.

In einer weiteren Ausgestaltung der Erfindung erfolgt die Betätigung der Eingabeeinrichtung durch räumliche Bewegung des Endgerätes, vorzugsweise durch ein wenigstens einmal erfolgendes Verschwenken des Endgerätes um wenigstens eine Koordinatenachse des Endgerätes. Auch bei dieser Ausgestaltung der Erfindung kann so die Bedienung und/oder Handhabung des Endgerätes dadurch vereinfacht werden, dass ansonsten erforderliche umfangreiche und/oder aufwändige Tasteneingaben entbehrlich sind.

In einer weiteren Ausgestaltung der Erfindung ist das Endgerät derart ausgebildet, dass eine weitergehende Nutzung der Informationen bei Betätigung der Eingabeeinrichtung vorzugsweise ohne ein zusätzliches Menü und/oder eine zusätzliche Menüführung auslösbar und/oder bewirkbar ist.

Vorteilhafterweise ist die weitergehende Nutzung der zur Verfügung stehenden Informationen und/oder die dazu gehörende Betätigung der Eingabeeinrichtung des erfindungsgemäßen Endgerätes einstellbar, vorzugsweise nutzerindividuell.

Gemäß einer besonders bevorzugten Ausgestaltung der Erfindung weist das Endgerät eine Einrichtung zur Gewichtung von für eine weitergehende Nutzung zur Verfügung stehender Informationen auf. Vorteilhaferweise ist die Gewichtung anhand der Anzahl von für eine weitergehende Nutzung zur Verfügung stehender Informationen bestimmbar. In einer weiteren vorteilhaften Ausgestaltung des erfindungsgemäßen Endgerätes ist die Gewichtung anhand des Vorhandenseins einer bestimmten Zeichenfolge seitens einer Information, vorzugsweise einer Mitteilung eines Nachrichtendienstes des Telekommunikationsnetzes bestimmbar. Die Zeichenfolge ist vorteilhafterweise einstellbar, vorzugsweise nutzerindividuell. Vorteilhafterweise sind als Zeichenfolge Schlüsselworte und/oder Telekommunikationsteilnehmern im Telekommunikationsnetz zugeordnete Rufnummern nutzbar. Seitens des Endgerätes ist vorteilhafterweise zur Auswertung der Zeichenfolge eine entsprechend ausgebildete Einrichtung vorgesehen, welche einen Vergleich einer vorgebbaren Zeichenfolge mit den in einer Information aufeinanderfolgenden Zeichen und/oder dem Vorhandensein entsprechender Zeichen seitens einer Information ermöglicht.

In einer bevorzugten Ausgestaltung der Erfindung ist das erfindungsgemäße Endgerät ein in Mobilfunknetzen betreibbares mobiles Endgerät, vorzugsweise ein Mobilfunktelefon.

Vorteilhafterweise ist das erfindungsgemäße Endgerät zur Ausführung des erfindungsgemäßen Verfahrens ausgebildet.

Weitere Einzelheiten, Merkmale und Vorteile der Erfindung werden nachfolgend anhand des in den Figuren der Zeichnung dargestellten Ausführungsbeispiels näher erläutert. Dabei zeigen:
- Fig. 1: in einer Draufsicht ein Ausführungsbeispiel eines erfindungsgemäßen Endgerätes zur Ausführung eines erfindungsgemäßen Verfahrens in einem ersten Funktionszustand;
- Fig. 2: in einer Draufsicht das erfindungsgemäße Endgerät zur Ausführung eines erfindungsgemäßen Verfahrens gemäß Fig. 1 mit einer erfolgenden Tasteneingabe und
- Fig. 3: in einer Draufsicht das erfindungsgemäße Endgerät zur Ausführung eines erfindungsgemäßen Verfahrens gemäß Fig. 1 in einem zweiten Funktionszustand nach erfolgter Tasteneingabe gemäß Fig. 2.

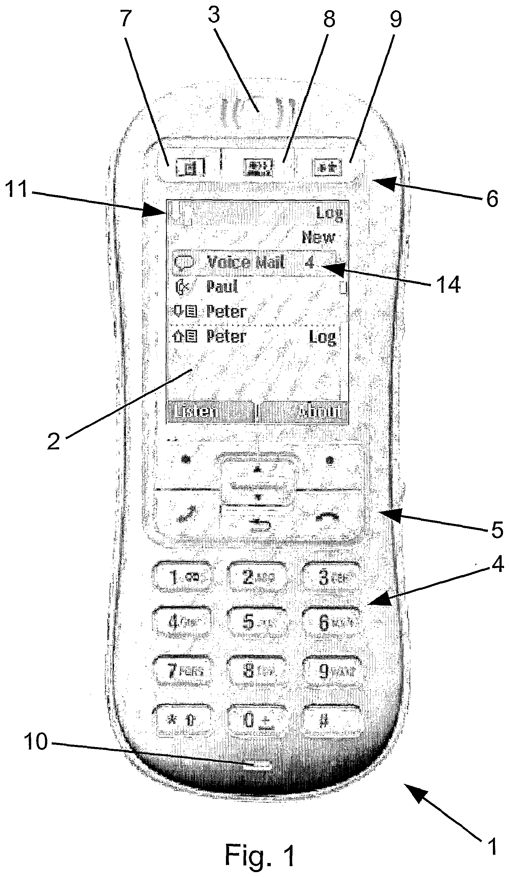

Die Fig. 1 bis 3 zeigen jeweils ein in einem Mobilfunknetz betreibbares mobiles Endgerät 1 in Form eines Mobilfunktelefons 1. Das Mobilfunktelefon 1 weist ein Display 2 als Anzeigeeinrichtung zur optischen Wiedergabe von Informationen, einen Lautsprecher 3 als Anzeigeeinrichtung zur akustischen Wiedergabe von Informationen, eine Tastatur 4, eine Tastatur 5 und eine Tastatur 6 sowie ein Mikrofon 10 als Eingabeeinrichtung zur Erfassung von Informationen und/oder Bedieneingaben auf.

Die Eingabeeinrichtungen 4, 5 und 6 des Mobilfunktelefons 1 weisen jeweils mehrere betätigbare Tasten auf. Die zwölf Tasten der Eingabeeinrichtung 4 dienen zur Erfassung von Informationen durch Eingabe von einzelnen Zeichen, beispielsweise Ziffern und/oder Buchstaben, durch entsprechende Tastenbetätigung. Die sechs Tasten der Eingabeeinrichtung 5 dienen zur Steuerung von und/oder durch Funktionalitäten des Mobilfunktelefons 1, beispielsweise zur Gesprächsannahme, Gesprächsbeendigung, Menüauswahl und dergleichen Funktionalitäten beziehungsweise Funktionen des Mobilfunktelefons 1. Die mittlere Taste der als Eingabeeinrichtung 5 dienenden Tastatur 5 ist dabei vorliegend als zwischen zwei Positionen kippbare Taste ausgebildet und erlaubt in entsprechenden Anwendungen des Mobilfunktelefons 1 ein sogenanntes Blättern beziehungsweise Scrollen, insbesondere für eine weitergehende Menü- und/oder Funktionsauswahl in beziehungsweise durch seitens des Mobilfunktelefons 1 implementierten Anwendungen. Die drei nebeneinander angeordneten Tasten 7, 8 und 9 der Eingabeeinrichtung 6 dienen vorliegend einer weitergehenden Nutzung von seitens der Anzeigeeinrichtung 2 wiedergegebenen Informationen, insbesondere Kommunikationsinformationen und/oder Terminfunktionalitäten repräsentierenden Informationen. Eine entsprechende weitergehende Nutzung wird dabei durch Betätigung einer der entsprechenden Tasten 7, 8 oder 9 der Eingabeeinrichtung 6 ermöglicht, vorliegend durch unmittelbare Auslösung beziehungsweise Bewirkung der entsprechenden weitergehenden Nutzung in Abhängigkeit von der jeweils betätigten Taste 7, 8 oder 9 der Eingabeeinrichtung 6.

Die Tasten 7, 8 und 9 der Eingabeeinrichtung 6 sind vorliegend in einem Bereich oberhalb der als Display ausgebildeten Anzeigeeinrichtung 2 angeordnet. Die als Eingabeeinrichtung 4 und 5 dienenden Tastaturen 4 und 5 sind vorliegend in einem Bereich unterhalb der als Display ausgebildeten Anzeigeeinrichtung 2 angeordnet. Dabei sind die Tasten der als Eingabeeinrichtung 5 dienenden Tastatur vorliegend unmittelbar unterhalb der Anzeigeeinrichtung 2, also an diese angrenzend, angeordnet. Die drei Tasten 7, 8 und 9 der Eingabeeinrichtung 6 sind vorliegend hinsichtlich ihrer Abmessungen größer als die Tasten der als Tastaturen 4 und 5 dienenden Eingabeeinrichtungen 4 und 5 ausgebildet. Ferner sind die Tasten 7, 8 und 9 der Eingabeeinrichtung 6 vorliegend in der Lage ihre Farbe zu ändern, wozu die Tasten 7, 8 und 9 der Eingabeeinrichtung 6 vorliegend jeweils eine mehrfarbige Hintergrundbeleuchtung aufweisen und entsprechend transparent sind. Die Tasten 7, 8 und 9 der Eingabeeinrichtung 6 des Mobilfunktelefons 1 können so insbesondere zur optischen Wiedergabe von seitens des Mobilfunktelefons 1 nutzbaren Informationen repräsentierenden Signalen genutzt werden, welche beispielsweise durch ein entsprechendes Leuchten, vorzugsweise mit einem Blinklicht, dem Nutzer des Mobilfunktelefons 1 signalisiert werden. Darüber hinaus können entsprechende Informationen repräsentierende Signale in optischer Form seitens der Anzeigeeinrichtung 2 wiedergegeben werden, beispielsweise durch ein entsprechendes Logo, Text oder dergleichen optischer Informationen, wie vorliegend im Zusammenhang mit der mit dem Bezugszeichen 9 gekennzeichneten Taste der Eingabeeinrichtung 6 und dem entsprechenden seitens der Anzeigeeinrichtung 2 wiedergegebenen, in den Figuren 1 bis 3 mit dem mit dem Bezugszeichen 11 gekennzeichneten Logo exemplarisch dargestellt. Für den Nutzer ist so eine gesteigerte Synergie in der Bedien- beziehungsweise Handhabbarkeit des Mobilfunktelefons 1 erzielbar, die eine Vereinfachung sowohl in der Wahrnehmung von Informationen als auch in der weitergehenden Nutzung derselben ermöglicht, insbesondere da diese so quasi mechanisiert durchführbar wird.

Um eine insbesondere für ältere und/oder ungeübte Nutzer einfachere und weniger umständliche Bedien- beziehungsweise Handhabbarkeit hinsichtlich einer weitergehenden Nutzung der Informationen zu ermöglichen, werden die Bedienmöglichkeiten zur weitergehenden Nutzung der Informationen seitens des Mobilfunktelefons 1 gewichtet und entsprechend seitens der Anzeigeeinrichtung 2 beziehungsweise 3 des Mobilfunktelefons 1 wiedergegeben. Vorliegend werden im Rahmen der Gewichtung der für eine weitergehende Nutzung zur Verfügung stehenden Informationen den möglichen Nutzungen und/oder Bedienmöglichkeiten derselben vorteilhafterweise die Tasten 7, 8 oder 9 der Eingabeeinrichtung 6 zugeordnet. In Abhängigkeit von der Gewichtung werden dann in den jeweiligen Funktionszuständen des Mobilfunktelefons 1 seitens der Anzeigeinrichtung 2 die Zuordnung der eine entsprechende weitergehende Nutzung der Informationen durch Betätigung ermöglichenden Tasten 7, 8 und/oder 9 der Eingabeeinrichtung 6 wiedergegeben. In den Fig. 1 bis 3 ist dies - wie bereits erläutert - anhand des auf der Taste 9 der Eingabeeinrichtung 6 verwendeten Symbols und der korrespondierend seitens der Anzeigeeinrichtung 2 erfolgenden Darstellung eines Logos 11 in der linken oberen Ecke der Anzeigeeinrichtung 2 erkennbar. Sowohl die Taste 9 der Eingabeeinrichtung 6 als auch das mit dem Bezugszeichen 11 versehene Logo seitens der Anzeigeeinrichtung 2 werden dabei in einer einander entsprechenden und/oder miteinander korrespondierenden Farbe wiedergegeben. Dem Nutzer des Mobilfunktelefons 1 wird so durch einfache Symbol- und/oder Farbzuordnung erfindungsgemäß die weitergehende Nutzung der Informationen seitens des Mobilfunktelefons 1 signalisiert. Insgesamt wird die Bedien- und/oder Handhabbarkeit einer weitergehenden Nutzung der zur Verfügung stehenden Informationen für den Nutzer so vorteilhafterweise in einer intuitiven und/oder mechanisierten Art und Weise ermöglicht.

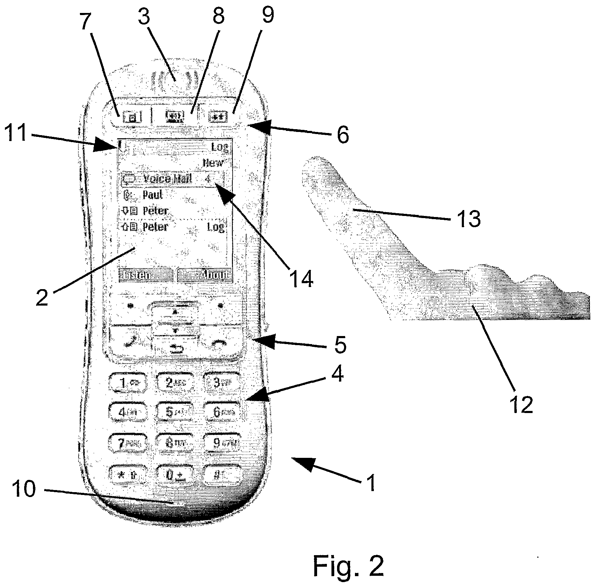

Fig. 2 zeigt symbolisch eine entsprechende Betätigung für eine weitergehende Nutzung zur Verfügung stehender Informationen, welche vorliegend seitens der Anzeigeeinrichtung 2 wiedergegeben werden. Vorliegend erfolgt eine weitergehende Nutzung von zur Verfügung stehender Informationen durch Betätigungseingabe durch Betätigung einer der Tasten 7, 8 und/oder 9 der Eingabeeinrichtung 6 mittels des Fingers 13 der Hand 12 eines hier nicht weiter dargestellten Nutzers des Mobilfunktelefons 1. Ergänzend kann eine entsprechende Betätigung der Eingabeeinrichtung für eine weitergehende Nutzung von seitens der Anzeigeeinrichtung 2 beziehungsweise 3 des Mobilfunktelefons 1 wiedergegebenen Informationen mittels einer über das als Eingabeeinrichtung dienende Mikrofon 10 erfolgenden Spracheingabe bewirkt beziehungsweise ausgelöst werden.

Bei dem in den Fig. 1 bis 3 ausgeführten Ausführungsbeispiel werden seitens der Anzeigeeinrichtung 2 des Mobilfunktelefons 1 für eine weitergehende Nutzung zur Verfügung stehende Informationen nach Art und/oder Typ sowie mit der entsprechenden Anzahl von für eine weitergehende Nutzung zur Verfügung stehender Informationen wiedergegeben. Bei dem in Fig. 1 dargestellten Ausführungsbeispiel sind seitens der Anzeigeeinrichtung 2 des Mobilfunktelefons 1 vier sogenannte "Voice Mails" eingegangen. Dem Nutzer wird neben der Art beziehungsweise des Typs der Information, vorliegend der Art beziehungsweise des Typs "Voice Mail" als Logo in Form einer Sprechblase und dahinter angeordnetem Text "Voice Mail" ferner die entsprechende Anzahl, vorliegend vier angezeigt. Dem Nutzer wird - wie oben bereits erläutert - durch die mit dem Pfeil 11 versehene Darstellung der Taste 9 der Eingabeeinrichtung 6 die Bedienung und/oder Handhabung des Mobilfunktelefons 1 vereinfachend angezeigt, dass zur entsprechend weitergehenden Nutzung dieser Informationen ("Voice Mails") die Taste 9 der Eingabeeinrichtung 6 zu betätigen ist.

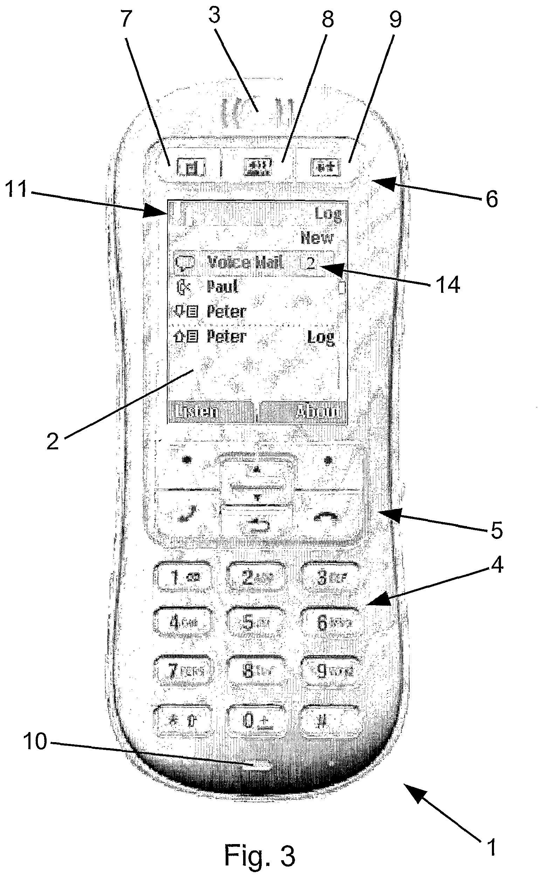

Fig. 3 zeigt das Mobilfunktelefon 1 in einem Funktionszustand nach durch den Nutzer erfolgter Betätigung der Taste 9 der Eingabeeinrichtung 6 gemäß Fig. 2, welche vorliegend eine weitergehende Nutzung der zur Verfügung stehenden Informationen, vorliegend der sogenannten "Voice Mails" ausgelöst beziehungsweise bewirkt hat. Seitens des Mobilfunktelefons 1 ist dabei eine Zähleinrichtung gegeben, welche die Anzahl von seitens des Mobilfunktelefons 1 für eine weitergehende Nutzung zur Verfügung stehender Informationen erfasst und in Abhängigkeit von einer erfolgenden weitergehenden Nutzung dekrementiert oder inkrementiert. Die Anzahl von für eine weitergehende Nutzung zur Verfügung stehender Informationen wird dabei, wie bereits erläutert, seitens der Anzeigeeinrichtung 2 wiedergegeben. Das Mobilfunktelefon 1 ist somit in der Lage, die jeweils zur Verfügung stehende Anzahl ungenutzter Informationen in jeweils aktualisierter Form zu erfassen und wiederzugeben. Bei dem in den Fig. 1 bis 3 dargestellten Ausführungsbeispiel hat der Nutzer 12 durch entsprechende Betätigungseingabe seitens der Taste 9 der Eingabeeinrichtung 6 von den vier für ihn zur Verfügung stehenden "Voice Mails" vorliegend zwei abgehört, so dass entsprechend seitens der Anzeigeeinrichtung 2 des Mobilfunktelefons 1 die entsprechend aktualisierte Anzahl ungenutzter "Voice Mails", vorliegend zwei, angezeigt wird. Dieser Funktionszustand des Mobilfunktelefons 1 ist in Fig. 3 anhand der wiedergegebenen Anzahl ungenutzter "Voice Mails" erkennbar, welche entsprechend der erfolgten weitergehenden Nutzung durch Abhören von zwei "Voice Mails" um zwei dekrementiert ist, so dass entsprechend der Darstellung in Fig. 3 seitens der Anzeigeeinrichtung 2 verbleibend noch zwei "Voice Mails" zur weitergehenden Nutzung als Anzahl wiedergegeben werden. Die Wiedergabe der Anzahl von für eine weitergehende Nutzung zur Verfügung stehender Informationen beziehungsweise der dafür seitens der Anzeigeeinrichtung 2 vorgesehene Bereich ist vorliegend in den Fig. 1 bis 3 durch den mit dem Bezugszeichen 14 gekennzeichneten Pfeil kenntlich gemacht.

Die Wiedergabe von für eine weitergehende Nutzung zur Verfügung stehender Informationen seitens der Anzeigeeinrichtung 2 des Mobilfunktelefons 1 erfolgt entsprechend einer Gewichtung, wozu das Mobilfunktelefon 1 eine entsprechende Einrichtung zur Bestimmung der Gewichtung aufweist. Die Gewichtung ist dabei vorteilhafterweise seitens des Mobilfunktelefons 1 einstellbar. Entsprechend der Gewichtung werden vorliegend zunächst Kommunikationsinformationen höherer Priorität weiter oben auf der Anzeigeeinrichtung 2 wiedergegeben, vorliegend die für den Nutzer 12 des Mobilfunktelefons 1 seitens eines Mobilfunknetzes eingegangenen "Voice Mails". Die Wiedergabe erfolgt vorteilhafterweise entsprechend einer mittels der Gewichtung ermittelten Dringlichkeit der Kommunikationsparameter, wobei vorliegend für den Nutzer 12 des Mobilfunktelefons 1 die eingegangenen "Voice Mails" als Kommunikationsinformationen höchste Priorität haben und entsprechend wiedergegeben werden. Darunter sind entsprechend der nutzerindividuellen Gewichtung als für den Nutzer des Mobilfunktelefons 1 dringlich eingestuften Kommunikationsparameter von "Paul" und "Peter" entsprechend wiedergegeben.

Die initiale beziehungsweise anfängliche Anzahl von für eine weitergehende Nutzung zur Verfügung stehenden Informationen wird vorliegend entsprechend der vorgeschlagenen Lösung aus dem im jeweiligen Funknetzstandard des Mobilfunknetzes standardisierten Formats für SMS extrahiert und der Zählereinrichtung zur Verfügung gestellt beziehungsweise übergeben. Ferner ist eine Extrahierung der initialen Anzahl von für eine weitergehende Nutzung zur Verfügung stehenden Informationen aus der jeweiligen Information, mit welcher der Nutzer über diese informiert wird, vorgesehen. Die Extrahierung der initialen Anzahl erfolgt dabei durch wenigstens eine Analyse des Textes der Information hinsichtlich einer bestimmten Zeichenfolge, welche die Information über die Anzahl aufweisen. Entsprechend der vorgeschlagenen Lösung der Erfindung wird die Information über die initiale Anzahl aus einer standardisierten SMS mittels der sogenannten TP-UDH binary counter information für Voicemails, E-Mails und/oder Fax gemäß 3GPP Standard extrahiert.

Die entsprechend durch Extrahierung bestimmte initiale Anzahl von für eine weitergehende Nutzung zur Verfügung stehenden Informationen wird dann entsprechend der weitergehenden Nutzung mittels der Zähleinrichtung seitens des Mobilfunktelefons 1 inkrementiert und/oder dekrementiert.

Wie bereits erläutert, ist mit der seitens des Mobilfunktelefons 1 vorhandenen Zähleinrichtung vorteilhafterweise ein Zähler realisiert beziehungsweise vorhanden, welcher die Anzahl eingehender und/oder abgehender Anrufe und/oder Mitteilungen eines Nachrichtendienstes, vorzugsweise sogenannte SMS und/oder MMS, des Mobilfunknetzes in dem das Mobilfunktelefon 1 betreibbar ist, bestimmt. Die Anzahl entsprechender Informationen wird vorliegend vorteilhafterweise für die Gewichtung berücksichtigt beziehungsweise genutzt.

Bei dem in Fig. 1 dargestellten Ausführungsbeispiel sind dementsprechend von der Zähleinrichtung des Mobilfunktelefons 1 - wie bereits erläutert - vier sogenannte "Voice Mails" indiziert. Die von dem Zähler beziehungsweise der Zähleinrichtung des Mobilfunktelefons 1 bestimmte Anzahl eingehender und/oder abgehender Anrufe und/oder Mitteilungen eines Nachrichtendienstes des Mobilfunknetzes wird vorteilhafterweise seitens der Anzeigeeinrichtung 2 des Mobilfunktelefons 1 wiedergegeben. Wie bereits erläutert, ist bei dem in Fig. 1 dargestellten Ausführungsbeispiel die Anzahl der dementsprechend von dem Zähler des Mobilfunktelefons 1 indizierten "Voice Mails" unmittelbar hinter deren Wiedergabe in einer Zeile angeordnet, wie anhand der Ziffer "4" hinter dem Eintrag "Voice Mails" in Fig. 1 und anhand des mit 14 gekennzeichneten Pfeils zu erkennen ist. Der Zähler beziehungsweise die Zähleinrichtung des Mobilfunktelefons 1 ist vorliegend vorteilhafterweise derart ausgebildet, dass dieser beziehungsweise diese die indizierte und wiedergegebene Anzahl eingehender und/oder abgehender Anrufe und/oder Mitteilungen eines Nachrichtendienstes des Mobilfunknetzes mit und/oder nach deren Nutzung beispielsweise durch Lesen oder Abhören durch den Nutzer entsprechend einer weitergehenden Nutzung derselben entsprechend den in den Fig. 2 und 3 dargestellten Ausführungsbeispiele dekrementiert oder inkrementiert und die entsprechend dekrementierte und/oder inkrementierte Anzahl eingehender und/oder abgehender Anrufe und/oder Mitteilungen eines Nachrichtendienstes des Mobilfunknetzes seitens der Anzeigeeinrichtung 2 des Mobilfunktelefons 1 wiedergibt. Die Inkrementierung oder Dekrementierung erfolgt dabei erfindungsgemäß in Abhängigkeit einer erfolgenden weitergehenden Nutzung der entsprechend für eine weitergehende Nutzung zur Verfügung stehenden Informationen.

Das in den Figuren der Zeichnung dargestellte und die im Zusammenhang mit diesem beschriebenen Ausführungsbeispiele der Erfindung dienen lediglich der Erläuterung der Erfindung und sind für diese nicht beschränkend.

### Bezugszeichenliste

- 1: Endgerät/Mobilfunktelefon
- 2: Anzeigeeinrichtung/Display
- 3: Anzeigeeinrichtung/Lautsprecher
- 4: Eingabeeinrichtung/Tastatur
- 5: Eingabeeinrichtung/Tasten
- 6: Eingabeeinrichtung/Tasten
- 7: Taste (Eingabeeinrichtung (6))
- 8: Taste (Eingabeeinrichtung (6))
- 9: Taste (Eingabeeinrichtung (6))
- 10: Eingabeeinrichtung/Mikrofon
- 11: Bereich Wiedergabe Logo
- 12: Hand/Nutzer
- 13: Finger/Nutzer
- 14: Wiedergabe Anzahl Informationen ("Voice Mail")

## Patentansprüche

1. Verfahren zum Betreiben eines in einem Telekommunikationsnetz nutzbaren Endgerätes (1), welches eine Anzeigeeinrichtung (2, 3) zur optischen und/oder akustischen Wiedergabe von Informationen und wenigstens eine Eingabeeinrichtung (4, 5, 6) zur Erfassung von Informationen aufweist, wobei die Anzahl von für eine weitergehende Nutzung zur Verfügung stehender Informationen erfasst und seitens der Anzeigeeinrichtung (2, 3) des Endgerätes (1) wiedergegeben wird und wobei durch Betätigung der Eingabeeinrichtung (4, 5, 6, 10) des Endgerätes (1) wenigstens eine weitergehende Nutzung von Informationen ermöglicht wird,
wobei die Anzahl in Abhängigkeit von einer erfolgenden weitergehenden Nutzung dekrementiert oder inkrementiert und entsprechend seitens der Anzeigeeinrichtung (2, 3) des Endgerätes (1) wiedergegeben wird, wobei die Anzahl von wenigstens einer Zähleinrichtung erfasst wird,
**dadurch gekennzeichnet, dass** die initiale Anzahl von für eine weitergehende Nutzung zur Verfügung stehender Informationen aus einer standardisierten Nachricht gemäß dem Funknetzstandard des Mobilfunknetzes extrahiert und der Zähleinrichtung zur Verfügung gestellt wird, wobei
eine Nutzung der TP-UDH binary counter information für Voicemails, Emails und/oder Fax gemäß dem 3GPP Standard für SMS zur Extrahierung der Anzahl aus der Nachricht vorgesehen ist,
und dass eine Analyse des Textes der Nachricht hinsichtlich einer bestimmten Zeichenfolge zur Extrahierung der Anzahl aus der Nachricht erfolgt.

2. Verfahren nach Anspruch 1, **dadurch gekennzeichnet, dass** wenigstens eine Zähleinrichtung seitens des Endgerätes (1) und/oder seitens des Telekommunikationsnetzes vorgesehen ist.

3. Verfahren nach Anspruch 1 oder Anspruch 2, **dadurch gekennzeichnet, dass** die Anzahl von an das Endgerät (1) gerichteter ungenutzter Kommunikationsinformationen erfasst wird.

4. Verfahren nach Anspruch 3, **dadurch gekennzeichnet, dass** die Anzahl seitens des Telekommunikationsnetzes erfasst, über das Telekommunikationsnetz an das Endgerät (1) übertragen und seitens der Anzeigeeinrichtung (2, 3) des Endgerätes (1) wiedergegeben wird.

5. Verfahren nach Anspruch 3 oder Anspruch 4, **dadurch gekennzeichnet, dass** die endgeräteseitige Nutzung von Kommunikationsinformationen erfasst, die Anzahl ungenutzter Kommunikationsinformationen entsprechend einer endgeräteseitig erfolgenden Nutzung aktualisiert und seitens der Anzeigeeinrichtung (2, 3) des Endgerätes (1) wiedergegeben wird.

6. Verfahren nach Anspruch 3 oder Anspruch 4, **dadurch gekennzeichnet, dass** die endgeräteseitige Nutzung von Kommunikationsinformationen seitens des Telekommunikationsnetzes erfasst, die Anzahl ungenutzter Kommunikationsinformationen entsprechend einer endgeräteseitig erfolgenden Nutzung aktualisiert, über das Telekommunikationsnetz an das Endgerät (1) übertragen und seitens der Anzeigeeinrichtung (2, 3) des Endgerätes (1) wiedergegeben wird.

7. Verfahren nach einem der Ansprüche 1 bis 6, **dadurch gekennzeichnet, dass** eine Wiedergabe der Anzahl seitens der Anzeigeeinrichtung (2, 3) des Endgerätes (1) erfolgt, wenn diese größer null ist.

8. Verfahren nach einem der Ansprüche 1 bis 7, **dadurch gekennzeichnet, dass** als Informationen Erinnerungsfunktionen für Termine, Funktions- und/oder Betriebszustände des Endgerätes (1) und/oder Kommunikationsinformationen wie eingehende, abgehende und/oder verpasste Anrufe und/oder Mitteilungen eines Nachrichtendienstes des Telekommunikationsnetzes genutzt werden.

9. Verfahren nach einem der Ansprüche 1 bis 8, **dadurch gekennzeichnet, dass** die Eingabeeinrichtung (6) des Endgerätes (1) wenigstens eine Taste (7, 8, 9) aufweist, die bei Betätigung wenigstens eine weitergehende Nutzung der Informationen ermöglicht.

10. Verfahren nach einem der Ansprüche 1 bis 8, **dadurch gekennzeichnet, dass** die Betätigung der Eingabeeinrichtung (10) des Endgerätes (1) für eine weitergehende Nutzung der Informationen akustisch durch Spracheingabe erfolgt.

11. Verfahren nach einem der Ansprüche 1 bis 8, **dadurch gekennzeichnet, dass** die Betätigung der Eingabeeinrichtung des Endgerätes (1) für eine weitergehende Nutzung der Informationen durch räumliche Bewegung des Endgerätes (1) durch ein wenigstens einmal erfolgendes Verschwenken des Endgerätes (1) um wenigstens eine Koordinatenachse des Endgerätes (1) erfolgt.

12. Verfahren nach einem der Ansprüche 9 bis 11, **dadurch gekennzeichnet, dass** die weitergehende Nutzung der Informationen bei Betätigung der Eingabeeinrichtung (4, 5, 6, 10) des Endgerätes (1) ohne ein zusätzliches Menü und/oder ohne eine zusätzliche Menüführung ausgelöst und/oder bewirkt wird.

13. Verfahren nach einem der Ansprüche 1 bis 12, **dadurch gekennzeichnet, dass** eine mehrfache Nutzung der Informationen durch entsprechende Betätigung der Eingabeeinrichtung (4, 5, 6, 10) des Endgerätes (1) ermöglicht wird.

14. Verfahren nach einem der Ansprüche 1 bis 13, **dadurch gekennzeichnet, dass** die weitergehende Nutzung der zur Verfügung stehenden Informationen und/oder die dazugehörende Betätigung der Eingabeeinrichtung (4, 5, 6, 10) des Endgerätes (1) nutzerindividuell einstellbar ist.

15. Verfahren nach einem der Ansprüche 1 bis 14, **dadurch gekennzeichnet, dass** die für eine weitergehende Nutzung zur Verfügung stehenden Informationen gewichtet und seitens der Anzeigeeinrichtung (2, 3) des Endgerätes (1) entsprechend der Gewichtung sortiert wiedergegeben werden.

16. Verfahren nach Anspruch 15, **dadurch gekennzeichnet, dass** die Gewichtung anhand der Anzahl von für eine weitergehende Nutzung zur Verfügung stehender Informationen bestimmt wird.

17. Verfahren nach Anspruch 15 oder Anspruch 16, **dadurch gekennzeichnet, dass** die Gewichtung anhand des Vorhandenseins einer bestimmten Zeichenfolge seitens einer Mitteilung eines Nachrichtendienstes des Telekommunikationsnetzes bestimmt wird.

18. Verfahren nach Anspruch 17, **dadurch gekennzeichnet, dass** die Zeichenfolge nutzerindividuell einstellbar ist.

19. Verfahren nach Anspruch 17 oder Anspruch 18, **dadurch gekennzeichnet, dass** als Zeichenfolge Schlüsselworte und/oder Telekommunikationsteilnehmern im Telekommunikationsnetz zugeordnete Rufnummern genutzt werden.

20. Verfahren nach einem der Ansprüche 1 bis 19, **dadurch gekennzeichnet, dass** dieses als Anwendungsprogramm auf das Endgerät (1) übertragbar und seitens des Endgerätes (1) ausführbar ist.

21. Endgerät (1) zur Nutzung in einem Mobilfunknetz mit einer Anzeigeeinrichtung (2, 3) zur optischen und/oder akustischen Wiedergabe von Informationen und wenigstens einer Eingabeeinrichtung (4, 5, 6, 10) zur Erfassung von Informationen, wobei die Anzahl von für eine weitergehende Nutzung zur Verfügung stehender Informationen seitens der Anzeigeeinrichtung (2, 3) wiedergebbar ist und durch Betätigung der Eingabeeinrichtung (4, 5, 6, 10) wenigstens eine weitergehende Nutzung von Informationen ermöglicht ist,
**dadurch gekennzeichnet,**
**dass** dieses ausgebildet und/oder eingerichtet ist, die seitens des Endgeräts (1) auszuführenden Verfahrensschritte eines Verfahrens nach einem der Ansprüche 1 bis 20 auszuführen.

## Claims

1. A method for operating a terminal (1) usable in a telecommunication network, which terminal comprises a display device (2, 3) for the optic and/or acoustic reproduction of information and at least one input device (4, 5, 6) for gathering information, wherein the number of information items available for a further use will be recorded and reproduced by means of the display device (2, 3) of the terminal (1) and wherein at least one further use of information will be enabled by actuating the input device (4, 5, 6, 10) of the terminal (1), wherein the number will be decremented or incremented in dependence on a further use taking place and will be correspondingly reproduced by means of the display device (2, 3) of the terminal (1), wherein
the number will be recorded by means of at least one counter,
**characterized in that** the initial number of information items available for a further use will be extracted from a standardized message according to the radio network standard of the mobile radio network and be made available to the counter, wherein
a use of the TP-UDH binary counter information for voice mails, e-mails and/or fax according to the 3GPP standard for SMS is provided for the extraction of the number from the message,
and that an analysis of the text of the message with respect to a particular character sequence will be made for extracting the number from the message.

2. A method according to claim 1, **characterized in that** at least one counter is provided by the terminal (1) and/or by the telecommunication network.

3. A method according to claim 1 or claim 2, **characterized in that** the number of unused communication information items addressed to the terminal (1) will be recorded.

4. A method according to claim 3, **characterized in that** the number will be recorded by the telecommunication network, transmitted to the terminal (1) via the telecommunication network and reproduced by means of the display device (2, 3) of the terminal (1).

5. A method according to claim 3 or claim 4, **characterized in that** the use of communication information by the terminal will be recorded, the number of unused communication information items will be updated corresponding to a use by the terminal and be reproduced by means of the display device (2, 3) of the terminal (1).

6. A method according to claim 3 or claim 4, **characterized in that** the use of communication information by the terminal will be recorded by the telecommunication network, the number of unused communication information items will be updated corresponding to a use by the terminal, be transmitted to the terminal (1) via the telecommunication network and be reproduced by means of the display device (2, 3) of the terminal (1).

7. A method according to one of the claims 1 to 6, **characterized in that** a reproduction of the number is carried out by the display device (2, 3) of the terminal (1), if said number is greater than zero.

8. A method according to one of the claims 1 to 7, **characterized in that** reminder functions for dates, functional and/or operational conditions of the terminal (1) and/or communication information such as incoming, outgoing and/or missed calls and/or messages of a message service of the telecommunication network will be used as information.

9. A method according to one of the claims 1 to 8, **characterized in that** the input device (6) of the terminal (1) comprises at least one key (7, 8, 9) which enables at least one further use of the information upon pressing.

10. A method according to one of the claims 1 to 8, **characterized in that** the actuation of the input device (10) of the terminal (1) for a further use of the information will be carried out acoustically by means of voice input.

11. A method according to one of the claims 1 to 8, **characterized in that** the actuation of the input device of the terminal (1) for a further use of the information will be carried out by spatial displacement of the terminal (1) by means of a pivoting of the terminal (1) around at least one coordinate axis of the terminal (1), which pivoting will at least take place once.

12. A method according to one of the claims 9 to 11, **characterized in that** the further use of the information will be activated and/or caused by the actuation of the input device (4, 5, 6, 10) of the terminal (1) without any additional menu and/or without any additional menu navigation.

13. A method according to one of the claims 1 to 12, **characterized in that** a multiple use of the information will be enabled by means of a corresponding actuation of the input device (4, 5, 6, 10) of the terminal (1).

14. A method according to one of the claims 1 to 13, **characterized in that** the further use of the available information and/or the associated actuation of the input device (4, 5, 6, 10) of the terminal (1) can be set user individually.

15. A method according to one of the claims 1 to 14, **characterized in that** the information available for a further use will be weighted and reproduced by means of the display device (2, 3) of the terminal (1) in an assorted manner according to the weighting.

16. A method according to claim 15, **characterized in that** the weighting will be determined by means of the number of information items that are available for a further use.

17. A method according to claim 15 or claim 16, **characterized in that** the weighting will be determined by means of the presence of a particular character sequence in a message of a message service of the telecommunication network.

18. A method according to claim 17, **characterized in that** the character sequence can be set user individually.

19. A method according to claim 17 or claim 18, **characterized in that** key words and/or call numbers assigned to telecommunication subscribers in the telecommunication network will be used as character sequences.

20. A method according to one of the claims 1 to 19, **characterized in that** this one can be transmitted to the terminal (1) as application program and be carried out by means of the terminal (1).

21. A terminal (1) for the use in a mobile radio network, comprising a display device (2, 3) for the optic and/or acoustic reproduction of information and at least one input device (4, 5, 6, 10) for gathering information, wherein the number of information items available for a further use can be reproduced by means of the display device (2, 3) and wherein at least one further use of information will be enabled by actuating the input device (4, 5, 6, 10),
**characterized in that**
said terminal is adapted and/or configured to carry out the process steps to be carried out by the terminal (1) of a method according to one of the claims 1 to 20.

## Revendications

1. Procédé de fonctionnement d'un terminal (1) utilisable dans un réseau de télécommunication, lequel terminal comprend un dispositif d'affichage (2, 3) pour la reproduction optique et/ou acoustique d'informations et au moins un dispositif d'entrée (4, 5, 6) pour collecter des informations, dans lequel le nombre d'informations disponibles pour une utilisation élargie est saisi et reproduit par moyen du dispositif d'affichage (2, 3) du terminal (1) et dans lequel l'actionnement du dispositif d'entrée (4, 5, 6, 10) du terminal (1) permet au moins une utilisation élargie d'informations,
dans lequel le nombre est décrémenté ou incrémenté en fonction d'une utilisation élargie effectuée et est reproduit de manière correspondante par le dispositif d'affichage (2, 3) du terminal (1), le nombre étant recueilli par au moins un dispositif de comptage,
**caractérisé en ce que** le nombre initial d'informations disponibles pour une utilisation élargie est extrait d'un message standardisé selon le standard de réseau radio du réseau radio mobile et mis à la disposition du dispositif de comptage, dans lequel
une utilisation de l'information de compteur binaire TP-UDH pour des messages vocaux, des emails et/ou des facsimiles selon le standard 3GPP pour des SMS est prévue pour extraire le nombre du message,
et qu'une analyse du texte du message par rapport à une chaîne de caractères spécifique est effectuée pour extraire le nombre du message.

2. Procédé selon la revendication 1, **caractérisé en ce qu'**au moins un dispositif de comptage est prévu par le terminal (1) et/ou par le réseau de télécommunication.

3. Procédé selon la revendication 1 ou la revendication 2, **caractérisé en ce que** le nombre d'informations de communication non utilisées et adressées au terminal (1) est enregistré.

4. Procédé selon la revendication 3, **caractérisé en ce que** le nombre est enregistré par le réseau de télécommunication, transmis au terminal (1) via le réseau de télécommunication et reproduit par le dispositif d'affichage (2, 3) du terminal (1).

5. Procédé selon la revendication 3 ou la revendication 4, **caractérisé en ce que** l'utilisation d'informations de communication par le terminal est enregistrée, le nombre d'Informations de communication non utilisées est actualisé conformément à une utilisation effectuée par le terminal et reproduit par moyen du dispositif d'affichage (2, 3) du terminal (1).

6. Procédé selon la revendication 3 ou la revendication 4, **caractérisé en ce que** l'utilisation d'informations de communication par le terminal est enregistrée par le réseau de télécommunication, le nombre d'Informations de communication non utilisées est actualisé conformément à une utilisation effectuée par le terminal, transmis au terminal (1) via le réseau de télécommunication et reproduit par moyen du dispositif d'affichage (2, 3) du terminal (1).

7. Procédé selon l'une des revendications 1 à 6, **caractérisé en ce que** le dispositif d'affichage (2, 3) du terminal (1) ne reproduit le nombre que si celui-ci est supérieur à zéro.

8. Procédé selon l'une des revendications 1 à 7, **caractérisé en ce que** des fonctions de rappel pour des dates fixées, des états fonctionnels et/ou opérationnels du terminal (1) et/ou des informations de communication telles que des appels et/ou des messages entrant, sortant et/ou manqués d'un service de messages du réseau de télécommunication sont utilisées comme informations.

9. Procédé selon l'une des revendications 1 à 8, **caractérisé en ce que** le dispositif d'entrée (6) du terminal (1) comprend au moins une touche (7, 8, 9), qui permet au moins une utilisation élargie des informations, si on appuie sur celle-ci.

10. Procédé selon l'une des revendications 1 à 8, **caractérisé en ce que** l'actionnement du dispositif d'entrée (10) du terminal (1) pour une utilisation élargie des informations se fait par commande vocale.

11. Procédé selon l'une des revendications 1 à 8, **caractérisé en ce que** l'actionnement du dispositif d'entrée du terminal (1) pour une utilisation élargie des informations se fait par déplacement spatial du terminal (1) par moyen d'un pivotement du terminal (1) autour d'au moins un axe de coordonnées du terminal (1), le pivotement se faisant au moins une fois.

12. Procédé selon l'une des revendications 9 à 11 **caractérisé en ce que** l'utilisation élargie des informations est déclenchée et/ou provoquée par l'actionnement du dispositif d'entrée (4, 5, 6, 10) du terminal (1) sans menu supplémentaire et/ou sans navigation de menu supplémentaire.

13. Procédé selon l'une des revendications 1 à 12, **caractérisé en ce qu'**une utilisation multiple des informations est rendue possible par un actionnement correspondant du dispositif d'entrée (4, 5, 6, 10) du terminal (1).

14. Procédé selon l'une des revendications 1 à 13, **caractérisé en ce que** l'utilisation élargie des informations disponibles et/ou l'actionnement associé du dispositif d'entrée (4, 5, 6, 10) du terminal peut être ajusté spécifiquement à chaque utilisateur.

15. Procédé selon l'une des revendications 1 à 14, **caractérisé en ce que** les informations disponibles pour une utilisation élargie sont pondérées et reproduites de manière triée en fonction de leur pondération par moyen du dispositif d'affichage (2, 3) du terminal (1).

16. Procédé selon la revendication 15, **caractérisé en ce que** la pondération est déterminée à l'aide du nombre d'informations disponibles pour une utilisation élargie.

17. Procédé selon la revendication 15 ou la revendication 16, **caractérisé en ce que** la pondération est déterminée sur la base de la présence d'une chaîne de caractères spécifique dans un message d'un service de messages du réseau de télécommunication.

18. Procédé selon la revendication 17, **caractérisé en ce que** la chaîne de caractères peut être ajustée spécifiquement à chaque utilisateur.

19. Procédé selon la revendication 17 ou la revendication 18, **caractérisé en ce que** des mots-clés et/ou des numéros d'appel attribués aux abonnés de télécommunication dans le réseau de télécommunication sont utilisés comme chaîne de caractères.

20. Procédé selon l'une des revendications 1 à 19, **caractérisé en ce que** celui-ci peut être transmis comme programme d'application au terminal (1) et effectué par le terminal (1).

21. Terminal (1) destiné à l'utilisation dans un réseau radio mobile, comprenant un dispositif d'affichage (2, 3) pour la reproduction optique et/ou acoustique d'informations et au moins un dispositif d'entrée (4, 5, 6, 10) pour collecter des informations, dans lequel le nombre d'informations disponibles pour une utilisation élargie peut être reproduit par moyen du dispositif d'affichage (2, 3) et dans lequel l'actionnement du dispositif d'entrée (4, 5, 6, 10) permet au moins une utilisation élargie d'informations,
**caractérisé en ce que**
celui-ci est configuré pour et/ou adapté à effectuer les étapes de procédé à effectuer par le terminal (1) d'un procédé selon l'une des revendications 1 à 20.
